# EUROPEAN PATENT SPECIFICATION

(11) **EP 3 906 752 B1**
(45) Date of publication and mention of the grant of the patent: **19.11.2025**
(21) Application number: 20911308.3
(22) Date of filing: 20.05.2020
(51) Int. Cl.: H04R 5/033, H04W 4/06, H04W 4/12, H04W 4/80, H04W 84/12, H04W 4/08, H04R 5/04, H04W 40/02, H04W 76/45

(54) **WIRELESS COMMUNICATION HEADSET SYSTEM**
HEADSET-SYSTEM ZUR DRAHTLOSKOMMUNIKATION
SYSTÈME DE CASQUE D'ÉCOUTE DE COMMUNICATION SANS FIL

(30) Priority: 10.03.2020 US 202016813980
(43) Date of publication of application: 10.11.2021
(73) Proprietor: SNAGGNIFICENT PRODUCTS, INC., Rosedale NY 11422 (US)
(72) Inventor: SNAGG, Ronald, Rosedale, NY 11422 (US)
(74) Representative: Script Intellectual Property LLP
(86) International application number: PCT/US2020/033764
(87) International publication number: WO 2021/183166

(56) References cited:
- EP-A1- 3 499 855
- KR-A- 20190 018 061
- US-A1- 2016 164 831
- US-A1- 2016 164 831
- US-A1- 2019 057 584
- US-A1- 2019 057 584
- US-A1- 2019 208 470

## Description

### CROSS REFERENCES TO RELATED APPLICATIONS

This application claims priority to US non-provisional application number 16/813,980 that was filed by the applicant, Ronald Snagg, on March 10, 2020.

### FIELD OF THE INVENTION

The present invention relates to the field of electricity and electric communication technique including wireless communication networks, more specifically, a direct mode connection management device. (H04W76/14)

### BACKGROUND

US2019/057584 discloses a system for delivering alerts, notifications and messages from one to many users wearing technology designed for single and/or multiple media types. The system uses a primary channel to allow a user to use the wearable device to say listen to a primary media channel, and a specialised logical audio router that manages non-primary communication channels and cut-in and allows alerts to be sent to the user and the user to respond on that channel. The non-primary channel may be addressed to a set of users that have subscribed to the channel.

EP3499855 discloses a wireless communication headset system for providing private audio communication among a plurality of individual communication devices.

US2019208470 discloses systems for establishing communications with one or more devices to allow a wake up radio signal to be directed to the one or more devices.

US2016164831 discloses a gateway **including** a router, an access point, a modem, and/or any other device that provides network access among one or more computing devices and/or external networks.

KR20190018061 discloses a digital assistant with some voice control.

### SUMMARY OF INVENTION

An aspect provides a wireless communication headset system according to claim 1.

The wireless communication headset system is a private communication system. The wireless communication headset system comprises a wireless routing device, a plurality of communication stations, and a plurality of wireless communication links. The wireless communication headset system supports audio and text-based communication between the plurality of communication stations. The wireless communication headset system supports a broadcast model of communication. By broadcast it is meant that: a) any first individual communication station selected from the plurality of communication stations receives any audio and text-based message transmitted by any second individual communication station selected from the plurality of communication stations; and, b) any audio and text-based message transmitted by any first individual communication station selected from the plurality of communication stations is received by all unselected individual communication stations remaining in the plurality of communication stations. The wireless routing device comprises a plurality of routing transceivers, a logical device, and a reset switch. The wireless routing device establishes a wireless communication link selected from the plurality of wireless communication links with each individual communication station contained in the plurality of communication stations. The plurality of routing transceivers, the logical device and the reset switch are electrically interconnected. The reset switch is a momentary switch, wherein the actuation of the reset switch indicates to the logical device that the plurality of routing transceivers should terminate each individual wireless communication link selected from the plurality of wireless communication links such that the communication network formed by the wireless communication system is shut down. The communication network is then reestablished by reestablishing each individual wireless communication link selected from the plurality of wireless communication links. The plurality of communication stations comprises a plurality of headsets and a plurality of text stations. Each of the plurality of headsets is a hands-free communication device selected from a group consisting of earbuds and headphones. Each of the plurality of headsets forms a wireless communication link selected from the plurality of wireless communication links with the wireless routing device. Each of the plurality of text stations is a text-based communication device. Each of the plurality of text stations is a text-based communication device. Each of the plurality of text stations forms a wireless communication link selected from the plurality of wireless communication links with the wireless routing device. The wireless routing device is a repeater that receives an audio or text-based message from any first individual communication station selected from the plurality of communication stations and retransmits the received message to each individual communication station remaining in the plurality of communication stations.

These together with additional objects, features and advantages of the wireless communication headset system will be readily apparent to those of ordinary skill in the art upon reading the following detailed description of the presently preferred, but nonetheless illustrative, embodiments when taken in conjunction with the accompanying drawings.

It is therefore important that the invention is only limited by the appended claims. It is also to be understood that the phraseology and terminology employed herein are for purposes of description and should not be regarded as limiting.

### BRIEF DESCRIPTION OF DRAWINGS

The accompanying drawings, which are included to provide a further understanding of the invention are incorporated in and constitute a part of this specification, illustrate an embodiment of the invention and together with the description serve to explain the principles of the invention. They are meant to be exemplary illustrations provided to enable persons skilled in the art to practice the disclosure and are not intended to limit the scope of the appended claims.
Figure 1 is a perspective view of an embodiment of the disclosure.
Figure 2 is a perspective view of an embodiment of the disclosure.
Figure 3 is a perspective view of an embodiment of the disclosure.
Figure 4 is a schematic diagram of an embodiment of the disclosure.
Figure 5 is a view of an embodiment of the disclosure.

### DETAILED DESCRIPTION OF THE EMBODIMENT

The following detailed description is merely exemplary in nature and is not intended to limit the described embodiments of the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to practice the disclosure and are not intended to limit the scope of the appended claims. Furthermore, there is no intention to be bound by any expressed or implied theory presented in the preceding technical field, background, brief summary or the following detailed description.

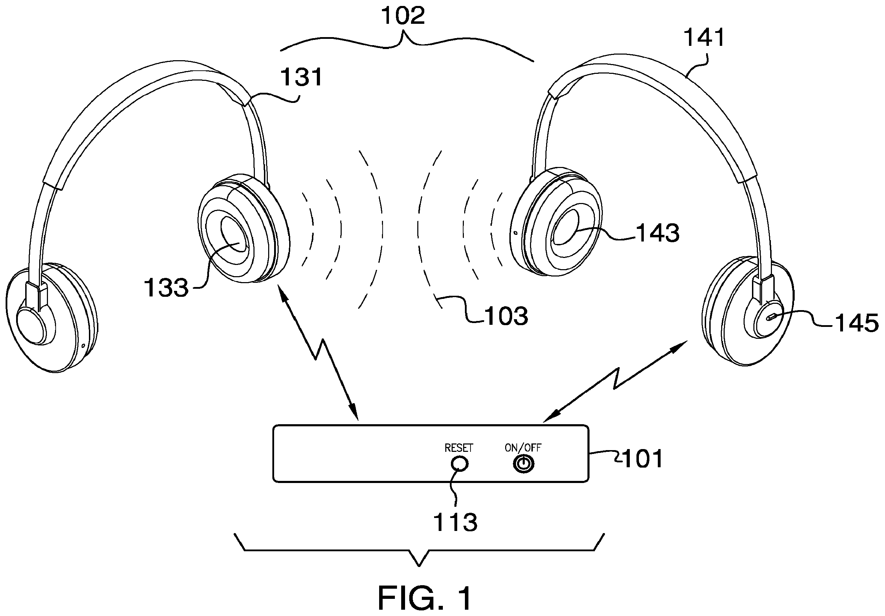

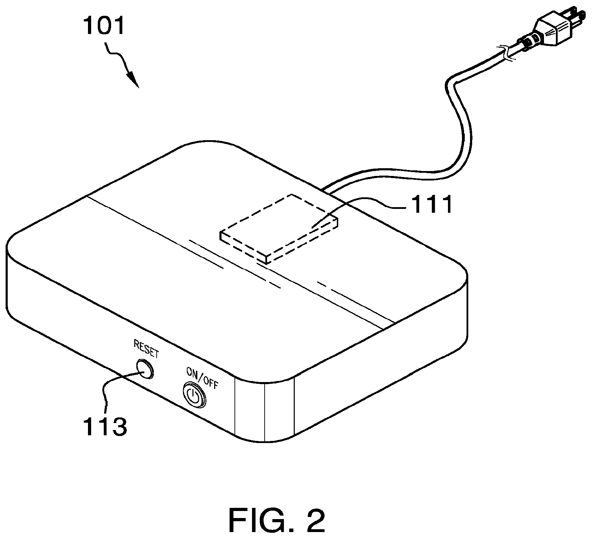

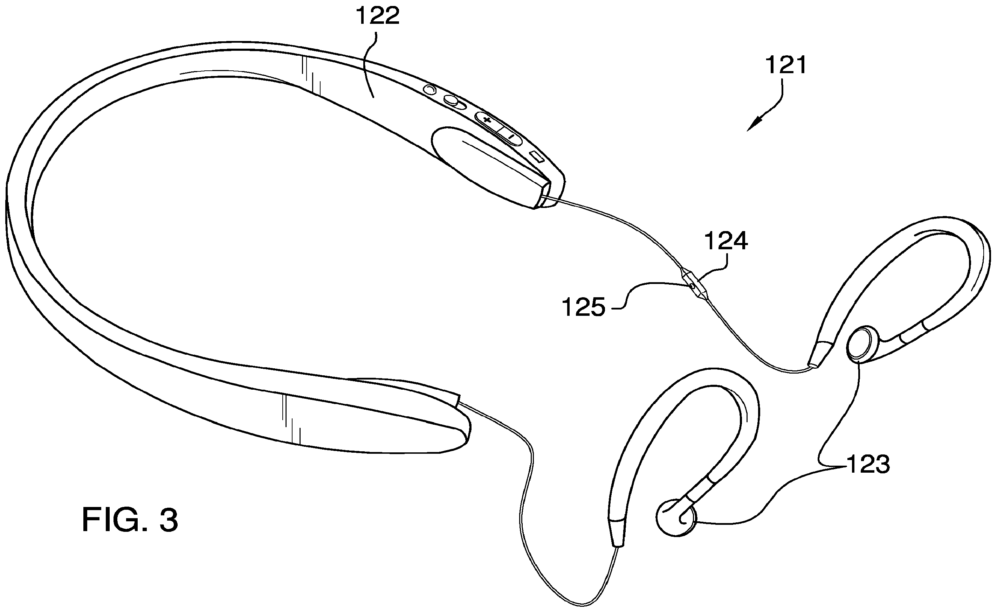

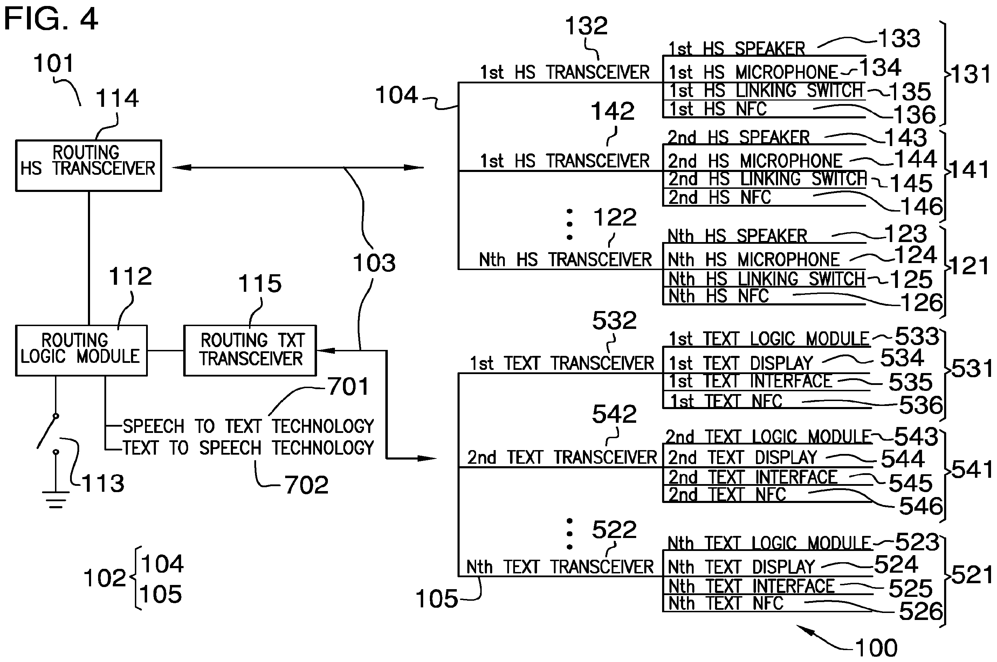

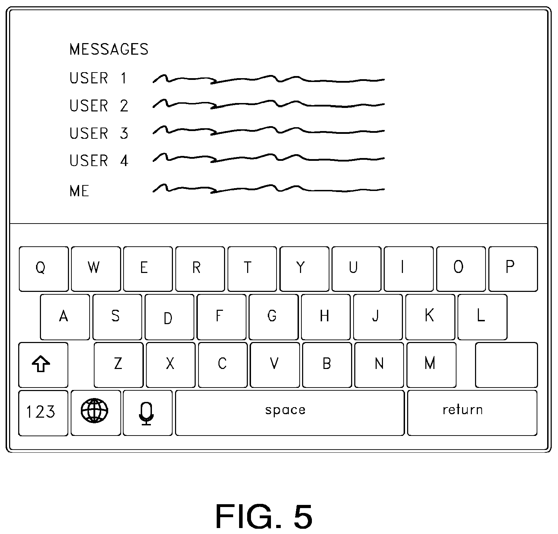

Detailed reference will now be made to one or more potential embodiments of the disclosure, which are illustrated in Figures 1 through 5.

The wireless communication headset system 100 (hereinafter invention) is a private communication system. The invention 100 comprises a wireless routing device 101, a plurality of communication stations 102, and a plurality of wireless communication links 103. The plurality of wireless communication links 103 establishes communication links between the wireless routing device 101 and each of the plurality of communication stations 102.

The invention 100 supports audio and text-based communication between the plurality of communication stations 102. The invention 100 supports a broadcast model of communication. By broadcast is meant that: a) any first individual communication station selected from the plurality of communication stations 102 receives any audio or text-based message transmitted by any second individual communication station selected from the plurality of communication stations 102; and, b) any audio or text-based message transmitted by any first individual communication station selected from the plurality of communication stations is received by all the unselected individual communication station remaining in the plurality of communication stations 102.

The invention 100 further supports private communication facility between a subset of communication stations selected from the plurality of communication stations 102. By private communication facility is meant that communications between the communication stations contained in the subset of communication stations selected from the plurality of communication stations 102 are broadcast on a separate communication channel such that communications between the subset of communication stations not accessible from any communication station not contained within the subset of communication stations.

The wireless routing device 101 establishes a wireless communication link selected from the plurality of wireless communication links 103 with each individual communication station contained in the plurality of communication stations 102. The wireless routing device 101 is a repeater that receives an audio or text-based message from any first individual communication station selected from the plurality of communication stations 102 and retransmits the audio or text-based message to each unselected individual communication station remaining in the plurality of communication stations 102.

Each of the plurality of wireless communication links 103 is a structured data exchange mechanism that is established between the wireless routing device 101 and an individual headset 121 selected from the plurality of headsets 104. Each of the plurality of wireless communication links 103 uses a wireless IEEE 802.11x communication protocol such that a physical electric connection between any individual headset 121 selected from the plurality of communication stations 102 and the wireless routing device 101 is not required.

The wireless routing device 101 is an electrical device. The wireless routing device 101 acts as a repeater. The wireless routing device 101 establishes a wireless communication link selected from the plurality of wireless communication links 103 with each individual communication station selected from the plurality of communication stations 102. The wireless routing device 101 receives an audio message from any first individual communication station selected from the plurality of communication stations 102 and retransmits the audio message to each unselected individual communication station remaining in the plurality of communication stations 102. The wireless routing device 101 terminates the plurality of wireless communication links 103. Each wireless communication link established by the wireless routing device 101 uses an IEEE 802.11x communication protocol. The wireless routing device 101 is a commercially available electric device commonly sold as a "WiFi^{™} router". The design and use of the wireless routing device 101 described above are well-known and documented in the electrical arts.

The wireless routing device 101 comprises a plurality of routing transceivers 111, a logical device 112, and a reset switch 113. The plurality of routing transceivers 111, the logical device 112, and the reset switch 113 are electrically interconnected.

Each of the plurality of routing transceivers 111 is an electrical device. The transceiver is defined elsewhere in this disclosure. Each of the plurality of routing transceivers 111 creates and maintains the plurality of wireless communication links 103 between the wireless routing device 101 and the plurality of communication stations 102. Each of the plurality of routing transceivers 111 is a multichannel device. By multichannel device is meant that each of the plurality of routing transceivers 111 simultaneously manages and maintains each of the multiple wireless communication links selected from the plurality of wireless communication links 103 formed between the plurality of communication stations 102 and the wireless routing device 101.

The plurality of routing transceivers 111 comprises a headset routing transceiver 114 and a text station routing transceiver 115. The plurality of routing transceivers 111 may operate in a fully wireless or wired capability.

The headset routing transceiver 114 is an electrical device. The transceiver is defined elsewhere in this disclosure. The headset routing transceiver 114 creates and maintains the plurality of wireless communication links 103 between the wireless routing device 101 and the plurality of headsets 104. The headset routing transceiver 114 is a multichannel device. By multichannel device is meant that the headset routing transceiver 114 simultaneously manages and maintains each of the multiple wireless communication links selected from the plurality of wireless communication links 103 formed between the plurality of communication stations 102 and the wireless routing device 101.

The text station routing transceiver 115 is an electrical device. The transceiver is defined elsewhere in this disclosure. The text station routing transceiver 115 creates and maintains the plurality of wireless communication links 103 between the wireless routing device 101 and the plurality of text stations 105. The text station routing transceiver 115 is a multichannel device. By multichannel device is meant that the text station routing transceiver 115 simultaneously manages and maintains each of the multiple wireless communication links selected from the plurality of wireless communication links 103 formed between the plurality of communication stations 102 and the wireless routing device 101.

The logical device 112 is an electric circuit. The logical device 112 manages, regulates, and operates the wireless routing device 101. The logical device 112 controls the operation of the plurality of routing transceivers 111. The logical device 112 monitors the reset switch 113. The logic module 112 operates: a) a speech to text technology 701; and, b) a text to speech technology 702. The speech to text technology 701 and the text to speech technology 702 are known technologies used in speech recognition systems. The logic module 112 processes audio messages received from the plurality of headset 104 through the speech to text technology 701 such that the logic module 112 transmits a text translation of the received audio message to the plurality of text stations 105 through the text station routing transceiver 115. The logic module 112 processes text-based messages received from the plurality of text stations 105 through the text to speech technology 102 such that the logic module 112 transmits an audio transcription of the received text-based message to the plurality of headsets 104 through the headset routing transceiver 114.

The reset switch 113 is a momentary switch. The actuation of the reset switch 113 indicates to the logical device 112 that the plurality of routing transceivers 111 should terminate each individual wireless communication link selected from the plurality of wireless communication links 103 such that the communication network formed by the invention 100 is shut down. The communication network is then reestablished by reestablishing each individual wireless communication link selected from the plurality of wireless communication links 103.

The plurality of communication stations 102 comprises a plurality of headsets 104 and a plurality of text stations 105.

Each of the plurality of headsets 104 is a hands-free communication device selected from the group consisting of earbuds and headphones. The term earbuds are defined elsewhere in this disclosure. The term headphones are defined elsewhere in this disclosure. Each of the plurality of headsets 104 forms a wireless communication link selected from the plurality of wireless communication links 103 with the wireless routing device 101. Each wireless communication link uses an IEEE 802.11x communication protocol. The plurality of headsets 104 comprises a collection of individual headsets 121.

Each of the plurality of headsets 104 is a hands-free communication device selected from the group consisting of earbuds and headphones. The term earbuds are defined elsewhere in this disclosure. The term headphones are defined elsewhere in this disclosure. Each of the plurality of headsets 104 forms a wireless communication link selected from the plurality of wireless communication links 103 with the wireless routing device 101. Each wireless communication link uses an IEEE 802.11x communication protocol. Each of the plurality of headsets 104 generates the audio message transmitted over the wireless communication link. Each of the plurality of headsets 104 announces any audio messages received over the wireless communication link.

Any first individual headset 121 selected from the plurality of headsets 104 transmits an audio message over the wireless communication link to the wireless routing device 101. Any first individual headset 121 selected from the plurality of headsets 104 receives any audio messages transmitted over the wireless communication link by the wireless routing device 101 that were transmitted by any second individual headset 121 selected from the plurality of headsets 104.

The plurality of headsets 104 comprises a collection of individual headsets 121.

The individual headset 121 is a wireless communication device. The individual headset 121 is selected from the group consisting of headphones and earbuds. The individual headset 121 establishes a wireless communication link selected from the plurality of wireless communication links 103 with the wireless routing device 101. The individual headset 121 generates and transmits an audio message to the wireless routing device 101 over the wireless communication link. The individual headset 121 receives an audio message that is transmitted from the wireless routing device 101 over the wireless communication link. Each individual headset 121 further comprises an individual headset 121 transceiver 122, an individual headset 121 speaker 123, an individual headset 121 microphone 124, an individual headset 121 linking switch 125, and an individual headset 121 near field communication circuit 126. The individual headset 121 transceiver 122, the individual headset 121 speaker 123, the individual headset 121 microphone 124, the individual headset 121 linking switch 125, and the individual headset 121 near field communication circuit 126 are electrically interconnected.

The individual headset 121 transceiver 122 is an electrical device. The transceiver is defined elsewhere in this disclosure. The individual headset 121 transceiver 122 creates and maintains the wireless communication link selected from the plurality of wireless communication links 103 between the wireless routing device 101 and the individual headset 121 transceiver 122.

The individual headset 121 speaker 123 is a transducer. The individual headset 121 speaker 123 receives electrical signals from the individual headset 121 transceiver 122. The individual headset 121 speaker 123 converts the received electrical signals into acoustic energy that is used to announce the received audio message.

The individual headset 121 microphone 124 is a transducer. The individual headset 121 microphone 124 detects acoustic energy in the vicinity of the individual headset 121 and converts the detected acoustic energy into an electric signal. The individual headset 121 microphone 124 transmits the generated electric signal to the individual headset 121 transceiver 122. The individual headset 121 transceiver 122 transmits the received electric signals to the wireless routing device 101 over the wireless communication link as an audio message.

The individual headset 121 transceiver 122 monitors the individual headset 121 linking switch 125. The individual headset 121 linking switch 125 is a momentary switch. The actuation of the individual headset 121 linking switch 125 indicates to the individual headset 121 transceiver 122 that the individual headset 121 should establish a wireless communication link selected from the plurality of wireless communication links 103 with the wireless routing device 101 such that the individual headset 121 joins the communication network formed by the invention 100.

The individual headset 121 near field communication circuit 126 is an implementation of an RFID (Radio Frequency Identification) technology known as Near Field Communication. The terms RFID and Near Field Communication are defined elsewhere in this disclosure. The individual headset 121 near field communication circuit 126 establishes the initial subset of communication stations selected from the plurality of communication stations 102 used to operate the private communication facility.

The actuation of the individual headset 121 linking switch 125 initiates the transmission of an RFID interrogation signal by the individual headset 121 near field communication circuit 126 of the transmitting individual headset 121. If a receiving individual head set 121 is within the effective range of the transmitting head set 121 (typically 10 cm), then the receiving individual head set 121: a) identifies and available communication channel that is separate from the current broadcast channel; b) changes operation to the identified separate communication channel; and, c) transmits to the transmitting individual headset 121 the identified separate communication channel. Upon receipt of the RFID response, transmitting individual headset 121 changes operation to the identified separate communication channel thereby establishing the initial subset of communication stations selected from the plurality of communication stations 102 using the private communication facility.

To add additional communication stations selected from the plurality of communication stations 102, the communication station to be added actuation of the individual headset 121 linking switch 125 thereby initiating the transmission of an RFID interrogation signal by the individual headset 121 near field communication circuit 126 to become the transmitting individual headset 121. If the receiving individual head set 121 is already a member of an existing subset of communication stations selected from the plurality of communication stations 102 using the private communication facility, then the individual headset 121 near field communication circuit 126 of the receiving individual headset 121 transmits to the individual headset 121 near field communication circuit 126 of the transmitting individual headset 121 the communication channel information of the existing subset of communication stations associated with the private communication facility.

The procedure described in the previous three paragraphs work for all communication stations selected from the plurality of communication stations 102 independent of whether the communication station is selected from the plurality of headsets 104 or the plurality of text stations 105.

In the first potential example of the disclosure, the plurality of headsets 104 comprises a first headset 131 and a second headset 141.

The first headset 131 further comprises a first headset 131 transceiver 132, a first headset 131 speaker 133, a first headset 131 microphone 134, and a first headset 131 linking switch 135, and a first headset 131 near field communication circuit 136. The first headset 131 transceiver 132, the first headset 131 speaker 133, the first headset 131 microphone 134, the first headset 131 linking switch 135, and the first headset 131 near field communication circuit 136 are electrically interconnected.

The first headset 131 is a headset used to join the communication network formed by the invention 100. The first headset 131 transceiver 132 is the individual headset 121 transceiver 122 associated with the first headset 131. The first headset 131 speaker 133 is the individual headset 121 speaker 123 associated with the first headset 131. The first headset 131 microphone 134 is the individual headset 121 microphone 124 associated with the first headset 131. The first headset 131 linking switch 135 is the individual headset 121 linking switch 125 associated with the first headset 131. The first headset 131 near field communication circuit 136 is the individual headset 121 near field communication circuit 126 associated with the first headset 131.

The second headset 141 further comprises a second headset 141 transceiver 142, a second headset 141 speaker 143, a second headset 141 microphone 144, and a second headset 141 linking switch 145, and a second headset 141 near field communication circuit 146. The second headset 141 transceiver 142, the second headset 141 speaker 143, the second headset 141 microphone 144, the second headset 141 linking switch 145, and the second headset 141 near field communication circuit 146 are electrically interconnected.

The second headset 141 is a headset used to join the communication network formed by the invention 100. The second headset 141 transceiver 142 is the individual headset 121 transceiver 122 associated with the second headset 141. The second headset 141 speaker 143 is the individual headset 121 speaker 123 associated with the second headset 141. The second headset 141 microphone 144 is the individual headset 121 microphone 124 associated with the second headset 141. The second headset 141 linking switch 145 is the individual headset 121 linking switch 125 associated with the second headset 141. The second headset 141 near field communication circuit 146 is the individual headset 121 near field communication circuit 126 associated with the second headset 141.

Each of the plurality of text stations 105 is a text-based communication device selected from the group consisting of earbuds and headphones. The term earbuds are defined elsewhere in this disclosure. The term headphones are defined elsewhere in this disclosure. Each of the plurality of text stations 105 forms a wireless communication link selected from the plurality of wireless communication links 103 with the wireless routing device 101. Each wireless communication link uses an IEEE 802.11x communication protocol. The plurality of text stations 105 comprises a collection of individual text stations 521.

The individual text station 521 is a wireless communication device. The individual text station 521 establishes a wireless communication link selected from the plurality of wireless communication links 103 with the wireless routing device 101. The individual text station 521 generates and transmits a text-based message to the wireless routing device 101 over the wireless communication link. The individual text station 521 receives the text-based message that is transmitted from the wireless routing device 101 over the wireless communication link. The individual text station 521 transceiver 522 creates and maintains the wireless communication link selected from the plurality of wireless communication links 103 between the text station routing transceiver 115 and each individual text station 521 transceiver 522.

Any first individual text station 521 selected from the plurality of text stations 105 transmits a text-based message over the wireless communication link to the wireless routing device 101. Any first individual text station 521 selected from the plurality of text stations 105 receives any text-based messages transmitted over the wireless communication link by the wireless routing device 101 that were transmitted by any second individual text station 521. Each of the plurality of text stations 105 generates the text-based message transmitted over the wireless communication link. Each of the plurality of text stations 105 displays the text-based messages received over the wireless communication link. Each individual text station 521 further comprises an individual text station 521 transceiver 522, an individual text station 521 logic module 523, an individual text station 521 display 524, and an individual text station 521 interface 525, and an individual text station 521 near field communication circuit 526.

The individual text station 521 transceiver 522, the individual text station 521 logic module 523, the individual text station 521 display 524 the individual text station 521 interface 525, and the individual text station 521 near field communication circuit 526 are electrically interconnected.

The individual text station 521 transceiver 522 is an electrical device. The transceiver is defined elsewhere in this disclosure. The individual text station 521 transceiver 522 creates and maintains the wireless communications link selected from the plurality of wireless communication links 103 between the plurality of text stations 105 and each individual text station 521 transceiver 522.

The individual text station 521 logic module 523 is a programmable electrical device. The individual text station 521 logic module 523 receives a text-based message from the individual text station 521 transceiver 522. The individual text station 521 logic module 523 converts the received electrical signals into a text-based message that is displayed on the individual text station 521 display 524.

The individual text station 521 display 524 is an electrical device used to display the text-based message transmitted from the individual text station 521 logic module 523. The individual text station 521 interface 525 receives a text-based message from the user of the individual text station 521 and transmits the text-based message to the individual text station 521 logic module 523 for transmission to the plurality of text stations 105 by the individual text station 521 transceiver 522.

The individual text station 521 near field communication circuit 526 is an implementation of an RFID (Radio Frequency Identification) technology known as Near Field Communication. The terms RFID and Near Field Communication are defined elsewhere in this disclosure. The individual text station 521 near field communication circuit 526 establishes the initial subset of communication stations selected from the plurality of communication stations 102 used to operate the private communication facility.

The individual text station 521 interface 525 initiates the transmission of an RFID interrogation signal by the individual text station 521 near field communication circuit 526 of the transmitting individual text station 521. If a receiving individual text station 521 is within the effective range of the transmitting text station 521 (typically 10 cm), then the receiving individual text station 521: a) identifies and available communication channel that is separate from the current broadcast channel; b) changes operation to the identified separate communication channel; and, c) transmits to the transmitting individual text station 521 the identified separate communication channel. Upon receipt of the RFID response, transmitting individual text station 521 changes operation to the identified separate communication channel thereby establishing the initial subset of communication stations selected from the plurality of communication stations 102 using the private communication facility.

To add additional communication stations selected from the plurality of communication stations 102, individual text station 521 linking switch 125 of the individual text station 521 to be added thereby initiates the transmission of an RFID interrogation signal by the individual text station 521 near field communication circuit 526 to become the transmitting individual text station 521. If the receiving individual head set 121 is already a member of an existing subset of communication stations selected from the plurality of communication stations 102 using the private communication facility, then the individual text station 521 near field communication circuit 526 of the receiving individual text station 521 transmits to the individual text station 521 near field communication circuit 526 of the transmitting individual text station 521 the communication channel information of the existing subset of communication stations associated with the private communication facility.

The procedure described in the previous three paragraphs work for all communication stations selected from the plurality of communication stations 102 independent of whether the communication station is selected from the plurality of headsets 104 or the plurality of text stations 105.

In the first potential example of the disclosure, the plurality of text stations 105 further comprises a first text station 531 and a second text station 541.

The first text station 531 further comprises a first text station 531 transceiver 532, a first text station 531 logic module 533, a first text station 531 display 534, first text station 531 interface 535, and a first text station 531 near field communication circuit 536. The first text station 531 transceiver 532, the first text station 531 logic module 533, the first text station 531 display 534 the first text station 531 interface 535, and the first text station 531 near field communication circuit 536 are electrically interconnected.

The first text station 531 is a headset used to join the communication network formed by the invention 100. The first text station 531 transceiver 532 is the individual text station 521 transceiver 522 associated with the first text station 531. The first text station 531 logic module 533 is the individual text station 521 logic module 523 associated with the first text station 531. The first text station 531 display 534 is the individual text station 521 display 524 associated with the first text station 531. The first text station 531 interface 535 is the individual text station 521 interface 525 associated with the first text station 531. The first text station 531 near field communication circuit 536 is the individual text station 521 near field communication circuit 526 associated with the first text station 531.

The second text station 541 further comprises a second text station 541 transceiver 542, a second text station 541 logic module 543, a second text station 541 display 544, a second text station 541 interface 545, and a second text station 541 near field communication circuit 546. The second text station 541 transceiver 542, the second text station 541 logic module 543, the second text station 541 display 544 and the second text station 541 interface 545, and the second text station 541 near field communication circuit 546 are electrically interconnected.

The second text station 541 is a headset used to join the communication network formed by the invention 100. The second text station 541 transceiver 542 is the individual text station 521 transceiver 522 associated with the second text station 541. The second text station 541 logic module 543 is the individual text station 521 logic module 523 associated with the second text station 541. The second text station 541 display 544 is the individual text station 521 display 524 associated with the second text station 541. The second text station 541 interface 545 is the individual text station 521 interface 525 associated with the second text station 541. The second text station 541 near field communication circuit 546 is the individual text station 521 near field communication circuit 526 associated with the second text station 541.

The following definitions were used in this disclosure:
Announce: As used in this disclosure, to announce means to generate audible sounds over a transducer.

Audio: As used in this disclosure, audio refers to the reproduction of a sound that simulates the sound that was originally created.

Audio Device: As used in this disclosure, an audio device is a device that generates audible sound waves.

Audio Source: As used in this disclosure, an audio source is a device that generates electrical signals that can be converted into audible sounds by an audio device such as a speaker.

Broadcast: As used in this disclosure, a broadcast refers to a radio frequency transmission intended to be received by a plurality of receivers.

Communication Link: As used in this disclosure, a communication link refers to the structured exchange of data between two objects.

Display: As used in this disclosure, a display is a surface upon which is presented an image, potentially including, but not limited to, graphic images and text, that is interpretable by an individual viewing the projected image in a meaningful manner. A display device refers to an electrical device used to present these images.

Earphone: As used in this disclosure, an earphone refers to a device that converts electrical signals into audible sounds that are worn or listened to in contact with the ear.

IEEE: As used in this disclosure, the IEEE (pronounced "I triple E") is an acronym for the Institute of Electrical and Electronic Engineers.

Hands-Free: As used in this disclosure, hands-free refers to a design characteristic of a device that allows the device to be used or operated without the use of the hands.

Headphone: As used in this disclosure, a headphone is a device that comprises one or two earphones that are held to the ear, typically through the use of a band placed on top of the head. The headphone comprises one or more speakers and an optional microphone to allow for: 1) private access to an audio communication system; and, 2) hands free access to an audio communication system. Headset is a synonym for headphone.

Interface: As used in this disclosure, an interface is a physical or virtual boundary that separates two different systems across which information is exchanged.

Logic Module: As used in this disclosure, a logic module is a readily and commercially available electrical device that accepts digital and analog inputs, processes the digital and analog inputs according to previously specified logical processes and provides the results of these previously specified logical processes as digital or analog outputs. The disclosure allows, but does not assume, that the logic module is programmable.

Logical Device: As used in this disclosure, a logical device is an electrical device that processes externally provided inputs to generate outputs that are determined from a previously determined logical functions. A logical device may or may not be programmable.

Microphone: As used in this disclosure, a microphone is a transducer that converts the energy from vibration into electrical energy. The sources of vibrations include, but are not limited to, acoustic energy.

Momentary Switch: As used in this disclosure, a momentary switch is a biased switch in the sense that the momentary switch has a baseline position that only changes when the momentary switch is actuated (for example, when a pushbutton switch is pushed or a relay coil is energized). The momentary switch then returns to the baseline position once the actuation is completed. This baseline position is called the "normal" position. For example, a "normally open" momentary switch interrupts (open) the electric circuit in the baseline position and completes (closes) the circuit when the momentary switch is activated. Similarly, a "normally closed" momentary switch will complete (close) an electric circuit in the baseline position and interrupt (open) the circuit when the momentary switch is activated.

Near Field Communication: As used in this disclosure, near field communication, commonly referred to as NFC, is an RFID technology and communication protocol that is commonly implemented on personal data devices. The operating range of near field technology is generally less than 20 centimeters.

Network: As used in this disclosure, a network refers to a data communication or data exchange structure where data is electronically transferred between nodes, also known as terminals, which are electrically attached to the network. In common usage, the operator of the network is often used as an adjective to describe the network. For example, a telecommunication network would refer to a network run by a telecommunication organization while a banking network will refer to a network operated by an organization involved in banking.

Repeater: As used in this disclosure, a repeater is an electrical device that receives a first signal from a first communication channel and transmits a duplicate second signal over a second communication channel. When a radio frequency wireless communication channel is used as both the first communication channel and the second communication channel the frequencies of operation of the first communication channel and the second communication channels may or may not be identical.

RFID: As used in this disclosure, RFID refers to Radio Frequency Identification technology. RFID is a wireless technology that uses electromagnetic field to identify and retrieve data from tracking tags that are placed on or near an object.

RFID Interrogator: As used in this disclosure, an RFID interrogator is a device that transmits a radio signal at frequency designed to activate RFID tracking tags that are tuned to operate at that frequency.

RFID Tracking Tag: As used in this disclosure, an RFID tracking tag is a reflective antenna that receives a radio signal from an RFID Interrogator and uses the energy received from the RFID interrogator signal to reflect a modified signal back to the RFID interrogator. The modified signal generally contains identification information about the RFID tag. The RFID interrogator receives and records these reflected signals. RFID tags are generally tuned to respond to a specific frequency. The RFID tracking tag as described to this point is a passive, or unpowered RFID tracking tag. There are also available within RFID technology active, or powered, RFID tracking tags. An active RFID tracking tag acts as a beacon that actively transmits identification information in a manner that can be received and recorded by an RFID interrogator. Within this disclosure, both passive and active RFID tracking tags are used.

Speaker: As used in this disclosure, a speaker is an electrical transducer that converts an electrical signal into an audible sound.

Speech Recognition: As used in this disclosure, an speech recognition refers to a collection of commercially available algorithms that capture process a digital representation of an audible sound in a manner that allows an electronically operated device, such as a computer, to extract data from the digital representation of an audible sound and take a subsequent action based on the data extracted from the audible sound.

Switch: As used in this disclosure, a switch is an electrical device that starts and stops the flow of electricity through an electric circuit by completing or interrupting an electric circuit. The act of completing or breaking the electrical circuit is called actuation. Completing or interrupting an electric circuit with a switch is often referred to as closing or opening a switch respectively. Completing or interrupting an electric circuit is also often referred to as making or breaking the circuit respectively.

Transceiver: As used in this disclosure, a transceiver is a device that is used to generate, transmit, and receive electromagnetic radiation such as radio signals.

Transducer: As used in this disclosure, a transducer is a device that converts a physical quantity, such as pressure or brightness into an electrical signal or a device that converts an electrical signal into a physical quantity.

WiFi^{™}: As used in this disclosure, WiFi^{™} refers to the physical implementation of a collection of wireless electronic communication standards commonly referred to as IEEE 802.11x.

Wireless: As used in this disclosure, wireless is an adjective that is used to describe a communication channel between two devices that does not require the use of physical cabling.

With respect to the above description, it is to be realized that the optimum dimensional relationship for the various components of the invention described above and in Figures 1 through 5 include variations in size, materials, shape, form, function, and manner of operation, assembly and use, are deemed readily apparent and obvious to one skilled in the art, and all equivalent relationships to those illustrated in the drawings and described in the specification are intended to be encompassed by the invention.

## Claims

1. A wireless communication system (100) comprising a wireless routing device (101), a plurality of communication stations (102), and a plurality of wireless communication links (103);
wherein the wireless routing device (101) establishes a wireless communication link selected from the plurality of wireless communication links (103) with each individual communication station contained in the plurality of communication stations (102);
wherein the wireless communication system (100) supports audio and text-based communication between the plurality of communication stations (102);
wherein the wireless communication system (100) is a private communication system;
wherein the wireless communication system (100) supports a broadcast model of communication;
wherein by broadcast is meant that:
a) any first individual communication station selected from the plurality of communication stations (102) receives any audio or text-based message transmitted by any second individual communication station selected from the plurality of communication stations (102); and,
b) any audio or text-based message transmitted by any first individual communication station selected from the plurality of communication stations (102) is received by all unselected individual communication station remaining in the plurality of communication stations (102);
wherein the wireless routing device (101) comprises a plurality of routing transceivers (111), a logical device (112), and a reset switch (113);
wherein the plurality of routing transceivers (111), the logical device (112), and the reset switch (113) are electrically interconnected;
wherein the reset switch (113) is a momentary switch; wherein the actuation of the reset switch (113) indicates to the logical device (112) that the plurality of routing transceivers (111) should terminate each individual wireless communication link selected from the plurality of wireless communication links (103) such that the communication network formed by the wireless communication system (100) is shut down;
wherein the communication network is then reestablished by reestablishing each individual wireless communication link selected from the plurality of wireless communication links (103);wherein the plurality of communication stations (102) comprises a plurality of headsets (104) and a plurality of text stations (105);
wherein each of the plurality of headsets (104) is a hands-free communication device selected from a group consisting of earbuds and headphones; wherein each of the plurality of headsets (104) forms a wireless communication link selected from the plurality of wireless communication links (103) with the wireless routing device (101);
wherein each of the plurality of text stations (105) is a text-based communication device;
wherein each of the plurality of text stations (105) forms a wireless communication link selected from the plurality of wireless communication links (103) with the wireless routing device (101).

2. The wireless communication system (100) according to claim 1
wherein the wireless communication system (100) supports a private communication facility;
wherein by private communication facility is meant that communications between the communication stations contained in the subset of communication stations selected from the plurality of communication stations (102) are broadcast on a separate communication channel such that communications between the subset of communication stations not accessible from any communication station not contained within the subset of communication stations.

3. The wireless communication system (100) according to claim 2
wherein the wireless routing device (101) receives a message from any first individual communication station selected from the plurality of communication stations (102) and retransmits the message to each unselected individual communication station remaining in the plurality of communication stations (102);
wherein the message is selected from the group consisting of an audio message and a text-based message.

4. The wireless communication system (100) according to claim 3 wherein each of the plurality of wireless communication links (103) is a structured data exchange mechanism that is established between the wireless routing device (101) and an individual headset (121) selected from the plurality of headsets (104).

5. The wireless communication system (100) according to claim 4 wherein the wireless routing device (101) terminates the plurality of wireless communication links (103).

6. The wireless communication system (100) according to claim 5
wherein each of the plurality of routing transceivers (111) is an electrical device;
wherein each of the plurality of routing transceivers (111) creates and maintains the plurality of wireless communication links (103)
between the wireless routing device (101) and
the plurality of communication stations (102);
wherein each of the plurality of routing transceivers (111) is a multichannel device;
wherein by multichannel device is meant that each of the plurality of routing transceivers (111) simultaneously manages and maintains each of the multiple wireless communication links selected from the plurality of wireless communication links (103) formed between the plurality of communication stations (102) and the wireless routing device (101).

7. The wireless communication system (100) according to claim 6
wherein the plurality of headsets (104) comprises a collection of individual headsets (121);
wherein each of the plurality of headsets (104) is a handsfree communication device selected from the group consisting of earbuds and headphones; wherein each of the plurality of headsets (104) forms a wireless communication link selected from the plurality of wireless communication links (103) with the wireless routing device (101);
wherein each of the plurality of headsets (104) announce any audio messages received over the wireless communication link;
wherein any first individual headset (121) selected from the plurality of headsets (104) transmits an audio message over the wireless communication link to the wireless routing device (101);
wherein any first individual headset (121) selected from the plurality of headsets (104) receives any audio messages transmitted over the wireless communication link by the wireless routing device (101) that were transmitted by any second individual headset (121) selected from the plurality of headsets (104).

8. The wireless communication system (100) according to claim 7
wherein the plurality of text stations (105) comprises a collection of individual text stations (521);
wherein the individual text station (521) is a wireless communication device;
wherein the individual text station (521) establishes a wireless communication link selected from the plurality of wireless communication links (103) with the wireless routing device (101);
wherein the individual text station (521) generates and transmits a text-based message to the wireless routing device (101) over the wireless communication link;
wherein the individual text station (521) receives the text-based message that is transmitted from the wireless routing device (101) over the wireless communication link;
wherein the individual text station transceiver (522) creates and maintains the wireless communication link selected from the plurality of wireless communication links (103) between the text station routing transceiver (115) and each individual text station transceiver;
wherein any first individual text station (521) selected from the plurality of text stations (105) transmits a text-based message over the wireless communication link to the wireless routing device (101);
wherein any first individual text station (521) selected from the plurality of text stations (105) receives any text-based messages transmitted over the wireless communication link by the wireless routing device (101) that were transmitted by any second individual text station (521);
wherein each of the plurality of text stations (105) generates the text-based message transmitted over the wireless communication link;
wherein each of the plurality of text stations (105) displays the text-based messages received over the wireless communication link.

9. The wireless communication system (100) according to claim 8
wherein the plurality of routing transceivers (111) comprises a headset routing transceiver (114) and a text station routing transceiver (115);
wherein the headset routing transceiver (114) is an electrical device;
wherein the headset routing transceiver (114) creates and maintains the plurality of wireless communication links (103) between the wireless routing device (101) and the plurality of headsets (104);
wherein the headset routing transceiver (114) is a multichannel device; wherein by multichannel device is meant that the headset routing transceiver (114) simultaneously manages and maintains each of the multiple wireless communication links (103) selected from the plurality of wireless communication links (103)
formed between the plurality of communication stations (102) and the wireless routing device (101);
wherein the text station routing transceiver (115) is an electrical device;
wherein the text station routing transceiver (115) creates and maintains the plurality of wireless communication links (103) between the wireless routing device (101) and the plurality of text stations (105);
wherein the text station routing transceiver (115) is a multichannel device;
wherein by multichannel device is meant that the text station routing transceiver (115) simultaneously manages and maintains each of the multiple wireless communication links (103) selected from the plurality of wireless communication links (103) formed between the plurality of communication stations (102) and
the wireless routing device (101).

10. The wireless communication system (100) according to claim 9
wherein the logical device (112) is an electric circuit;
wherein the logical device (112) controls the operation of the plurality of routing transceivers (111);
wherein the logical device (112) monitors the reset switch (113).

11. The wireless communication system (100) according to claim 10
wherein the logic module (112) operates: a) a speech to text technology (701); and, b) a text to speech technology (702);
wherein the logic module (112) processes audio messages received from the plurality of headset through the speech to text technology (701) such that the logic module (112) transmits a text translation of the received audio message to the plurality of text stations (105) through the text station routing transceiver (115);
wherein the logic module (112) processes text-based messages received from the plurality of text stations (105) through the text to speech technology (702) such that the logic module (112) transmits an audio transcription of the received text-based message to the plurality of headsets (104) through the headset routing transceiver (114).

12. The wireless communication system (100)
according to claim 1
wherein the individual headset (121) is a wireless communication device;
wherein the individual headset (121) is selected from the group consisting of headphones and earbuds;
wherein the individual headset (121) establishes a wireless communication link selected from the plurality of wireless communication links (103) with the wireless routing device (101);
wherein the individual headset (121) generates and transmits an audio message to the wireless routing device (101) over the wireless communication link; wherein the individual headset (121) receives an audio message that is transmitted from the wireless routing device (101) over the wireless communication link.

## Patentansprüche

1. Drahtloses Kommunikationssystem (100), umfassend eine drahtlose Routingvorrichtung (101), eine Vielzahl von Kommunikationsstationen (102) und eine Vielzahl von drahtlosen Kommunikationsverbindungen (103);
wobei die drahtlose Routingvorrichtung (101) eine drahtlose Kommunikationsverbindung, die ausgewählt ist aus der Vielzahl von drahtlosen Kommunikationsverbindungen (103) mit jeder einzelnen in der Vielzahl von Kommunikationsstationen (102) enthaltenen Kommunikationsstation herstellt;
wobei das drahtlose Kommunikationssystem (100) eine audio- und textbasierte Kommunikation zwischen der Vielzahl von Kommunikationsstationen (102) unterstützt; wobei das drahtlose Kommunikationssystem (100) ein privates Kommunikationssystem ist;
wobei das drahtlose Kommunikationssystem (100) ein Übertragungskommunikationsmodell unterstützt;
wobei mit Übertragung gemeint ist, dass
a) eine beliebige erste einzelne Kommunikationsstation, die ausgewählt ist aus der Vielzahl von Kommunikationsstationen (102) eine beliebige audio- oder textbasierte Nachricht empfängt, die von einer beliebigen zweiten einzelnen Kommunikationsstation gesendet wird, die ausgewählt ist aus der Vielzahl von Kommunikationsstationen (102);
und
b) eine beliebige audio- oder textbasierte Nachricht, die von einer beliebigen ersten einzelnen Kommunikationsstation, die ausgewählt ist aus der Vielzahl von Kommunikationsstationen (102), gesendet wird, von allen nicht ausgewählten einzelnen Kommunikationsstationen, die in der Vielzahl von Kommunikationsstationen (102) übrig bleiben, empfangen wird;
wobei die drahtlose Routingvorrichtung (101), eine Vielzahl von Routing-Sender-Empfängern (111), eine Logikvorrichtung (112) und einen Rücksetzschalter (113) umfasst;
wobei die Vielzahl von Routing-Sender-Empfängern (111), die Logikvorrichtung (112) und der Rücksetzschalter (113) elektronisch miteinander verbunden sind;
wobei der Rücksetzschalter (113) ein Momentschalter ist;
wobei die Betätigung des Rücksetzschalters (113) der Logikvorrichtung (112) angibt, dass die Vielzahl von Routing-Sender-Empfängern (111) jede einzelne drahtlose Kommunikationsverbindung, die ausgewählt ist aus der Vielzahl von drahtlosen Kommunikationsverbindungen (103) beenden muss, sodass das von dem drahtlosen Kommunikationssystem (100) ausgebildete Kommunikationsnetzwerk heruntergefahren wird;
wobei das Kommunikationsnetzwerk dann wiederhergestellt wird, durch Wiederherstellen jeder einzelnen drahtlosen Kommunikationsverbindung, die ausgewählt ist aus der Vielzahl von drahtlosen Kommunikationsverbindungen (103); wobei die Vielzahl von Kommunikationsstationen (102) eine Vielzahl von Headsets (104) und eine Vielzahl von Textstationen (105) umfasst;
wobei jedes der Vielzahl von Headsets (104) eine freihändige Kommunikationsvorrichtung ist, die ausgewählt ist aus einer Gruppe bestehend aus Ohrstöpseln und Kopfhörern;
wobei jedes der Vielzahl von Headsets (104) eine drahtlose Kommunikationsverbindung, die ausgewählt ist aus der Vielzahl von drahtlosen Kommunikationsverbindungen (103), mit der drahtlosen Routingvorrichtung (101) ausbildet;
wobei jede der Vielzahl von Textstationen (105) eine textbasierte Kommunikationsvorrichtung ist;
wobei jede der Vielzahl von Textstationen (105) eine drahtlose Kommunikationsverbindung, die ausgewählt ist aus der Vielzahl von drahtlosen Kommunikationsverbindungen (103), mit der drahtlosen Routingvorrichtung (101) ausbildet.

2. Drahtloses Kommunikationssystem (100) nach Anspruch 1,
wobei das drahtlose Kommunikationssystem (100) eine private Kommunikationseinrichtung unterstützt;
wobei mit privater Kommunikationseinrichtung gemeint ist, dass Kommunikationen zwischen den Kommunikationsstationen, die in dem Teilsatz von Kommunikationsstationen enthalten sind, der ausgewählt ist aus der Vielzahl von Kommunikationsstationen (102), auf einem separaten Kommunikationskanal übertragen werden, sodass Kommunikationen zwischen dem Teilsatz von Kommunikationsstationen nicht von einer beliebigen Kommunikationsstation zugänglich sind, die nicht innerhalb des Teilsatzes von Kommunikationsstationen enthalten ist.

3. Drahtloses Kommunikationssystem (100) nach Anspruch 2,
wobei die drahtlose Routingvorrichtung (101) eine Nachricht von einer beliebigen ersten einzelnen Kommunikationsstation empfängt, die ausgewählt ist aus der Vielzahl von Kommunikationsstationen (102), und die Nachricht weitersendet an jede nicht ausgewählte einzelne Kommunikationsstationen, die in der Vielzahl von Kommunikationsstationen (102) übrig bleibt;
wobei die Nachricht ausgewählt ist aus der Gruppe bestehend aus einer Audionachricht und einer textbasierten Nachricht.

4. Drahtloses Kommunikationssystem (100) nach Anspruch 3, wobei jede der Vielzahl von drahtlosen Kommunikationsverbindungen (103) ein strukturierter Datenaustauschmechanismus ist, der zwischen der drahtlosen Routingvorrichtung (101) und einem einzelnen Headset (121), das ausgewählt ist aus der Vielzahl von Headsets (104), hergestellt ist.

5. Drahtloses Kommunikationssystem (100) nach Anspruch 4, wobei die drahtlose Routingvorrichtung (101) die Vielzahl von drahtlosen Kommunikationsverbindungen (103) beendet.

6. Drahtloses Kommunikationssystem (100) nach Anspruch 5,
wobei jeder der Vielzahl von Routing-Sender-Empfängern (111) eine elektrische Vorrichtung ist;
wobei jeder der Vielzahl von Routing-Sender-Empfängern (111) die Vielzahl von drahtlosen Kommunikationsverbindungen (103) zwischen der drahtlosen Routingvorrichtung (101) und der Vielzahl von Kommunikationsstationen (102) aufbaut und aufrechterhält;
wobei jede der Vielzahl von Routing-Sender-Empfängern (111) eine Mehrkanalvorrichtung ist;
wobei mit Mehrkanalvorrichtung gemeint ist, dass jeder der Vielzahl von Routing-Sender-Empfängern (111) gleichzeitig jede der mehreren drahtlosen Kommunikationsverbindungen verwaltet und aufrechterhält, die ausgewählt sind aus der Vielzahl von drahtlosen Kommunikationsverbindungen (103), die zwischen der Vielzahl von Kommunikationsstationen (102) und der drahtlosen Routingvorrichtung (101) ausgebildet sind.

7. Drahtloses Kommunikationssystem (100) nach Anspruch 6,
wobei die Vielzahl von Headsets (104) eine Sammlung von einzelnen Headsets (121) umfasst;
wobei jedes der Vielzahl von Headsets (104) eine freihändige Kommunikationsvorrichtung ist, die ausgewählt ist aus der Gruppe bestehend aus Ohrstöpseln und Kopfhörern;
wobei jedes der Vielzahl von Headsets (104) eine drahtlose Kommunikationsverbindung, die ausgewählt ist aus der Vielzahl von drahtlosen Kommunikationsverbindungen (103), mit der drahtlosen Routingvorrichtung (101) ausbildet;
wobei jedes der Vielzahl von Headsets (104) beliebige Audionachrichten mitteilt, die über die drahtlose Kommunikationsverbindung empfangen werden;
wobei ein beliebiges erstes einzelnes Headset (121), das ausgewählt ist aus der Vielzahl von Headsets (104), eine Audionachricht über die drahtlose Kommunikationsverbindung an die drahtlose Routingvorrichtung (101) sendet;
wobei ein beliebiges erstes einzelnes Headset (121), das ausgewählt ist aus der Vielzahl von Headsets (104) beliebige von der drahtlosen Routingvorrichtung (101) über die drahtlose Kommunikationsverbindung gesendete Audionachrichten empfängt, die von einem beliebigen zweiten einzelnen Headset (121), das ausgewählt ist aus der Vielzahl von Headsets (104), gesendet werden.

8. Drahtloses Kommunikationssystem (100) nach Anspruch 7,
wobei die Vielzahl von Textstationen (105) eine Sammlung von einzelnen Textstationen (521) umfasst;
wobei die einzelne Textstation (521) eine drahtlose Kommunikationsvorrichtung ist; wobei die einzelne Textstation (521) eine drahtlose Kommunikationsverbindung, die ausgewählt ist aus der Vielzahl von drahtlosen Kommunikationsverbindungen (103), mit der drahtlosen Routingvorrichtung (101) herstellt;
wobei die einzelne Textstation (521) eine textbasierte Nachricht erzeugt und über die drahtlose Kommunikationsverbindung an die drahtlose Routingvorrichtung (101) sendet; wobei die einzelne Textstation (521) die textbasierte Nachricht empfängt, die von der drahtlosen Routingvorrichtung (101) über die drahtlose Kommunikationsverbindungen gesendet wird;
wobei der einzelne Textstation-Sender-Empfänger (522) die drahtlose Kommunikationsverbindung, die ausgewählt ist aus der Vielzahl von drahtlosen Kommunikationsverbindungen (103), zwischen dem Textstation-Routing-Sender-Empfänger (115) und jedem einzelnen Textstation-Sender-Empfänger aufbaut und aufrechterhält;
wobei eine beliebige erste einzelne Textstation (521), die ausgewählt ist aus der Vielzahl von Textstationen (105), eine textbasierte Nachricht über die drahtlose Kommunikationsverbindung an die drahtlose Routingvorrichtung (101) sendet;
wobei eine beliebige erste einzelne Textstation (521), die ausgewählt ist aus der Vielzahl von Textstationen (105) beliebige von der drahtlosen Routingvorrichtung (101) über die drahtlose Kommunikationsverbindung gesendete textbasierte Nachrichten empfängt, die von einer zweiten beliebigen einzelnen Textstation (521) gesendet werden;
wobei jede der Vielzahl von Textstationen (105) die textbasierte Nachricht erzeugt, die über die drahtlose Kommunikationsverbindung gesendet wird;
wobei jede der Vielzahl von Textstationen (105) die textbasierten Nachrichten, die über die drahtlose Kommunikationsverbindung empfangen werden, anzeigt.

9. Drahtloses Kommunikationssystem (100) nach Anspruch 8,
wobei die Vielzahl von Routing-Sender-Empfängern (111) einen Headset-Routing-Sender-Empfänger (114) und einen Textstation-Routing-Sender-Empfänger (115) umfasst;
wobei der Headset-Routing-Sender-Empfänger (114) eine elektrische Vorrichtung ist; wobei der Headset-Routing-Sender-Empfänger (114) die Vielzahl von drahtlosen Kommunikationsverbindungen (103) zwischen der drahtlosen Routingvorrichtung (101) und der Vielzahl von Headsets (104) aufbaut und aufrechterhält;
wobei der Headset-Routing-Sender-Empfänger (114) eine Mehrkanalvorrichtung ist, wobei mit Mehrkanalvorrichtung gemeint ist, dass der Headset-Routing-Sender-Empfänger (114) gleichzeitig jede der mehreren drahtlosen Kommunikationsverbindungen (103) verwaltet und aufrechterhält, die ausgewählt sind aus der Vielzahl von drahtlosen Kommunikationsverbindungen (103), die zwischen der Vielzahl von Kommunikationsstationen (102) und der drahtlosen Routingvorrichtung (101) ausgebildet sind;
wobei der Textstation-Routing-Sender-Empfänger (115) eine elektrische Vorrichtung ist; wobei der Textstation-Routing-Sender-Empfänger (115) die Vielzahl von drahtlosen Kommunikationsverbindungen (103) zwischen der drahtlosen Routingvorrichtung (101) und der Vielzahl von Textstationen (105) aufbaut und aufrechterhält;
wobei der Textstation-Routing-Sender-Empfänger (115) eine Mehrkanalvorrichtung ist; wobei mit Mehrkanalvorrichtung gemeint ist, dass der Textstation-Routing-Sender-Empfänger (115) gleichzeitig jede der mehreren drahtlosen Kommunikationsverbindungen (103) verwaltet und aufrechterhält, die ausgewählt sind aus der Vielzahl von drahtlosen Kommunikationsverbindungen (103), die zwischen der Vielzahl von Kommunikationsstationen (102) und der drahtlosen Routingvorrichtung (101) ausgebildet sind.

10. Drahtloses Kommunikationssystem (100) nach Anspruch 9,
wobei die Logikvorrichtung (112) eine elektrische Vorrichtung ist;
wobei die Logikvorrichtung (112) den Betrieb der Vielzahl von Routing-Sender-Empfängern (111) steuert;
wobei die Logikvorrichtung (112) den Rücksetzschalter (113) überwacht.

11. Drahtloses Kommunikationssystem (100) nach Anspruch 10,
wobei das Logikmodul (112) Folgendes betreibt: a) eine Sprache-zu-Text-Technologie (701) und b) eine Text-zu-Sprache-Technologie (702);
wobei das Logikmodul (112) Audionachrichten, die von der Vielzahl von Headsets durch die Sprache-zu-Text-Technologie (701) empfangen werden, so verarbeitet, dass das Logikmodul (112) durch den Textstation-Routing-Sender-Empfänger (115) eine Textübertragung der empfangenen Audionachricht an die Vielzahl von Textstationen (105) sendet;
wobei das Logikmodul (112) textbasierte Nachrichten, die von der Vielzahl von Textstationen (105) durch die Text-zu-Sprache-Technologie (702) empfangen werden, so verarbeitet, dass das Logikmodul (112) durch den Headset-Routing-Sender-Empfänger (114) eine Audiotranskription der empfangenen textbasierten Nachricht an die Vielzahl von Headsets (104) sendet.

12. Drahtloses Kommunikationssystem (100) nach Anspruch 1,
wobei das einzelne Headset (121) eine drahtlose Kommunikationsvorrichtung ist; wobei das einzelne Headset (121) ausgewählt ist aus der Gruppe bestehend aus Kopfhörern und Ohrstöpseln;
wobei das einzelne Headset (121) eine drahtlose Kommunikationsverbindung, die ausgewählt ist aus der Vielzahl von drahtlosen Kommunikationsverbindungen (103), mit der drahtlosen Routingvorrichtung (101) herstellt;
wobei das einzelne Headset (121) eine Audionachricht erzeugt und über die drahtlose Kommunikationsverbindungen an die drahtlose Routingvorrichtung (101) sendet; wobei das einzelne Headset (121) eine Audionachricht empfängt, die von der drahtlosen Routingvorrichtung (101) über die drahtlose Kommunikationsverbindung gesendet wird.

## Revendications

1. Système de communication sans fil (100) comprenant un dispositif de routage sans fil (101), une pluralité de terminaux de communication (102) et une pluralité de liaisons de communication sans fil (103) ;
dans lequel le dispositif de routage sans fil (101) établit une liaison de communication sans fil sélectionnée parmi la pluralité de liaisons de communication sans fil (103) avec chaque terminal de communication individuel contenu dans la pluralité de terminaux de communication (102) ;
dans lequel le système de communication sans fil (100) prend en charge une communication audio et basée sur du texte entre la pluralité de terminaux de communication (102) ;
dans lequel le système de communication sans fil (100) est un système de communication privé ;
dans lequel le système de communication sans fil (100) prend en charge un modèle de communication par diffusion ;
dans lequel, par diffusion, on entend que :
a) tout premier terminal de communication individuel sélectionné parmi la pluralité de terminaux de communication (102) reçoit tout message audio ou basé sur du texte transmis par tout deuxième terminal de communication individuel sélectionné parmi la pluralité de terminaux de communication (102) ; et,
b) tout message audio ou basé sur du texte transmis par tout premier terminal de communication individuel sélectionné parmi la pluralité de terminaux de communication (102) est reçu par l'ensemble de terminaux de communication individuels non sélectionnés restants dans la pluralité de terminaux de communication (102) ;
dans lequel le dispositif de routage sans fil (101) comprend une pluralité d'émetteursrécepteurs de routage (111), un dispositif logique (112) et un commutateur de réinitialisation (113) ;
dans lequel la pluralité d'émetteurs-récepteurs de routage (111), le dispositif logique (112) et le commutateur de réinitialisation (113) sont électriquement interconnectés ; dans lequel le commutateur de réinitialisation (113) est un commutateur momentané ; dans lequel l'actionnement du commutateur de réinitialisation (113) indique au dispositif logique (112) que la pluralité d'émetteurs-récepteurs de routage (111) doit mettre fin à chaque liaison de communication sans fil individuelle sélectionnée parmi la pluralité de liaisons de communication sans fil (103) de telle sorte que le réseau de communication formé par le système de communication sans fil (100) soit arrêté ;
dans lequel le réseau de communication est ensuite rétabli en rétablissant chaque liaison de communication sans fil individuelle sélectionnée parmi la pluralité de liaisons de communication sans fil (103) ; dans lequel la pluralité de terminaux de communication (102) comprend une pluralité de casques de communication (104) et une pluralité de terminaux textuels (105) ;
dans lequel chacun de la pluralité de casques de communication (104) est un dispositif de communication mains libres sélectionné parmi un groupe constitué d'écouteurs et de casques d'écoute ;
dans lequel chacun de la pluralité de casques de communication (104) forme une liaison de communication sans fil sélectionnée parmi la pluralité de liaisons de communication sans fil (103) avec le dispositif de routage sans fil (101) ;
dans lequel chacun de la pluralité de terminaux textuels (105) est un dispositif de communication basé sur du texte ;
dans lequel chacun de la pluralité de terminaux textuels (105) forme une liaison de communication sans fil sélectionnée parmi la pluralité de liaisons de communication sans fil (103) avec le dispositif de routage sans fil (101).

2. Système de communication sans fil (100) selon la revendication 1 dans lequel le système de communication sans fil (100) prend en charge une fonction de communication privée ;
dans lequel, par fonction de communication privée, on entend que les communications entre les terminaux de communication contenues dans le sous-ensemble de terminaux de communication sélectionné parmi la pluralité de terminaux de communication (102) sont diffusées sur un canal de communication distinct, de telle sorte que les communications entre le sous-ensemble de terminaux de communication ne sont pas accessibles depuis tout terminal de communication ne faisant pas partie du sous-ensemble de terminaux de communication.

3. Système de communication sans fil (100) selon la revendication 2 dans lequel le dispositif de routage sans fil (101) reçoit un message provenant de tout premier terminal de communication individuel sélectionné parmi la pluralité de terminaux de communication (102) et retransmet le message à chaque terminal de communication individuel non sélectionné restant dans la pluralité de terminaux de communication (102) ; dans lequel le message est sélectionné parmi le groupe constitué d'un message audio et d'un message basé sur du texte.

4. Système de communication sans fil (100) selon la revendication 3 dans lequel chacune de la pluralité de liaisons de communication sans fil (103) est un mécanisme d'échange de données structuré qui est établi entre le dispositif de routage sans fil (101) et un casque de communication individuel (121) sélectionné parmi la pluralité de casques de communication (104).

5. Système de communication sans fil (100) selon la revendication 4 dans lequel le dispositif de routage sans fil (101) met fin à la pluralité de liaisons de communication sans fil (103).

6. Système de communication sans fil (100) selon la revendication 5 dans lequel chacun de la pluralité d'émetteurs-récepteurs de routage (111) est un dispositif électrique ;
dans lequel chacun de la pluralité d'émetteurs-récepteurs de routage (111) crée et maintient la pluralité de liaisons de communication sans fil (103) entre le dispositif de routage sans fil (101) et la pluralité de terminaux de communication (102) ;
dans lequel chacun de la pluralité d'émetteurs-récepteurs de routage (111) est un dispositif multicanal ;
dans lequel, par dispositif multicanal, on entend que chacun de la pluralité d'émetteursrécepteurs de routage (111) gère et maintient simultanément chacune des multiples liaisons de communication sans fil sélectionnées parmi la pluralité de liaisons de communication sans fil (103) formées entre la pluralité de terminaux de communication (102) et le dispositif de routage sans fil (101).

7. Système de communication sans fil (100) selon la revendication 6 dans lequel la pluralité de casques de communication (104) comprend un ensemble de casques de communication individuels (121) ;
dans lequel chacun de la pluralité de casques de communication (104) est un dispositif de communication mains libres sélectionné parmi le groupe constitué d'écouteurs et de casques d'écoute ;
dans lequel chacun de la pluralité de casques de communication (104) forme une liaison de communication sans fil sélectionnée parmi la pluralité de liaisons de communication sans fil (103) avec le dispositif de routage sans fil (101) ;
dans lequel chacun de la pluralité de casques de communication (104) annonce tout message audio reçu sur la liaison de communication sans fil ;
dans lequel tout premier casque de communication individuel (121) sélectionné parmi la pluralité de casques de communication (104) transmet un message audio sur la liaison de communication sans fil au dispositif de routage sans fil (101) ;
dans lequel tout premier casque de communication individuel (121) sélectionné parmi la pluralité de casques de communication (104) reçoit tous messages audio transmis sur la liaison de communication sans fil par le dispositif de routage sans fil (101) qui ont été transmis par tout deuxième casque de communication individuel (121) sélectionné parmi la pluralité de casques de communication (104).

8. Système de communication sans fil (100) selon la revendication 7 dans lequel la pluralité de terminaux textuels (105) comprend un ensemble de terminaux textuels individuels (521) ;
dans lequel le terminal textuel individuel (521) est un dispositif de communication sans fil ;
dans lequel le terminal textuel individuel (521) établit une liaison de communication sans fil sélectionnée parmi la pluralité de liaisons de communication sans fil (103) avec le dispositif de routage sans fil (101) ;
dans lequel le terminal textuel individuel (521) génère et transmet un message basé sur du texte au dispositif de routage sans fil (101) sur la liaison de communication sans fil ; dans lequel le terminal textuel individuel (521) reçoit le message basé sur du texte qui est transmis à partir du dispositif de routage sans fil (101) sur la liaison de communication sans fil ;
dans lequel l'émetteur-récepteur de terminal textuel individuel (522) crée et maintient la liaison de communication sans fil sélectionnée parmi la pluralité de liaisons de communication sans fil (103) entre l'émetteur-récepteur de routage pour terminaux textuels (115) et chaque émetteur-récepteur de terminal textuel individuel ;
dans lequel tout premier terminal textuel individuel (521) sélectionné parmi la pluralité de terminaux textuels (105) transmet un message basé sur du texte sur la liaison de communication sans fil au dispositif de routage sans fil (101) ;
dans lequel tout premier terminal textuel individuel (521) sélectionné parmi la pluralité de terminaux textuels (105) reçoit tous messages basés sur du texte transmis sur la liaison de communication sans fil par le dispositif de routage sans fil (101) qui ont été transmis par tout deuxième terminal textuel individuel (521) ;
dans lequel chacun de la pluralité de terminaux textuels (105) génère le message basé sur du texte transmis sur la liaison de communication sans fil ;
dans lequel chacun de la pluralité de terminaux textuels (105) affiche les messages basés sur du texte reçus sur la liaison de communication sans fil.

9. Système de communication sans fil (100) selon la revendication 8 dans lequel la pluralité d'émetteurs-récepteurs de routage (111) comprend un émetteur-récepteur de routage pour casques de communication (114) et un émetteur-récepteur de routage pour terminaux textuels (115) ;
dans lequel l'émetteur-récepteur de routage pour casques de communication (114) est un dispositif électrique ;
dans lequel l'émetteur-récepteur de routage pour casques de communication (114) crée et maintient la pluralité de liaisons de communication sans fil (103) entre le dispositif de routage sans fil (101) et la pluralité de casques de communication (104) ;
dans lequel l'émetteur-récepteur de routage pour casques de communication (114) est un dispositif multicanal ; dans lequel, par dispositif multicanal, on entend que l'émetteur-récepteur de routage pour casques de communication (114) gère et maintient simultanément chacune des multiples liaisons de communication sans fil (103) sélectionnées parmi la pluralité de liaisons de communication sans fil (103) formées entre la pluralité de terminaux de communication (102) et le dispositif de routage sans fil (101) ; dans lequel l'émetteur-récepteur de routage pour terminaux textuels (115) est un dispositif électrique ;
dans lequel l'émetteur-récepteur de routage pour terminaux textuels (115) crée et maintient la pluralité de liaisons de communication sans fil (103) entre le dispositif de routage sans fil (101) et la pluralité de terminaux textuels (105) ;
dans lequel l'émetteur-récepteur de routage pour terminaux textuels (115) est un dispositif multicanal ;
dans lequel, par dispositif multicanal, on entend que l'émetteur-récepteur de routage pour terminaux textuels (115) gère et maintient simultanément chacune des multiples liaisons de communication sans fil (103) sélectionnées parmi la pluralité de liaisons de communication sans fil (103) formées entre la pluralité de terminaux de communication (102) et le dispositif de routage sans fil (101).

10. Système de communication sans fil (100) selon la revendication 9 dans lequel le dispositif logique (112) est un circuit électrique ;
dans lequel le dispositif logique (112) contrôle le fonctionnement de la pluralité d'émetteurs-récepteurs de routage (111) ;
dans lequel le dispositif logique (112) surveille le commutateur de réinitialisation (113).

11. Système de communication sans fil (100) selon la revendication 10 dans lequel le module logique (112) fait fonctionner : a) une technologie de conversion de la parole en texte (701) ; et, b) une technologie de conversion du texte en parole (702) ;
dans lequel le module logique (112) traite les messages audio reçus à partir de la pluralité de casques de communication au moyen de la technologie de conversion de la parole en texte (701), de telle sorte que le module logique (112) transmette une traduction textuelle du message audio reçu à la pluralité de terminaux textuels (105) au moyen de l'émetteur-récepteur de routage pour terminaux textuels (115) ;
dans lequel le module logique (112) traite les messages basés sur du texte reçus à partir de la pluralité de terminaux textuels (105) au moyen de la technologie de conversion du texte en parole (702), de telle sorte que le module logique (112) transmette une transcription audio du message basé sur du texte reçu à la pluralité de casques de communication (104) au moyen de l'émetteur-récepteur de routage pour casques de communication (114).

12. Système de communication sans fil (100) selon la revendication 1 dans lequel le casque de communication individuel (121) est un dispositif de communication sans fil ;
dans lequel le casque de communication individuel (121) est sélectionné parmi le groupe constitué de casques d'écoute et d'écouteurs ;
dans lequel le casque de communication individuel (121) établit une liaison de communication sans fil sélectionnée parmi la pluralité de liaisons de communication sans fil (103) avec le dispositif de routage sans fil (101) ;
dans lequel le casque de communication individuel (121) génère et transmet un message audio au dispositif de routage sans fil (101) sur la liaison de communication sans fil ;
dans lequel le casque de communication individuel (121) reçoit un message audio qui est transmis à partir du dispositif de routage sans fil (101) sur la liaison de communication sans fil.
